# FASCICULE DE BREVET EUROPEEN

(11) **EP 2 814 209 B1**
(45) Date de publication et mention de la délivrance du brevet: **04.05.2016**
(21) Numéro de dépôt: 14172070.6
(22) Date de dépôt: 12.06.2014
(51) Int. Cl.: H04L 12/28

(54) **Dispositif pour l'accès à Internet via un réseau de communication mobile**
Vorrichtung für Internetzugang über ein mobiles Kommunikationsnetz
Device for accessing the internet via a mobile communication network

(30) Priorité: 12.06.2013 FR 1355449
(43) Date de publication de la demande: 17.12.2014
(73) Titulaire: Orange, 75015 Paris (FR)
(72) Inventeur: Laurenziani, Clément, 92140 Clamart (FR); Augui, Jérôme, 92190 Meudon (FR)
(74) Mandataire: Regimbeau

(56) Documents cités:
- AU-A4- 2012 100 603
- US-B1- 7 530 823
- Anonymous: "Longshine LCS-8156C1 USB Modem 56K:", , 11 novembre 2010 (2010-11-11), XP055106414, Extrait de l'Internet: URL:http://www.amazon.de/Longshine-LCS-815 6C1-USB-Modem-56K/dp/B004BU6TH8/ref=pd_sxp _f_pt [extrait le 2014-03-10]
- Anonymous: "the Imation Micro HD", , 28 décembre 2005 (2005-12-28), pages 1-2, XP055106360, CNET News Extrait de l'Internet: URL:http://news.cnet.com/2300-1041_3-60110 22.html [extrait le 2014-03-10]

## Description

La présente invention concerne un dispositif pour l'accès à Internet via un réseau de communication mobile.

### ETAT DE L'ART

On connait de nombreux dispositifs pour l'accès à Internet via un réseau de communication mobile. Ils permettent à un utilisateur de continuer à utiliser Internet dans tous ses déplacements.

Ces dispositifs sont couramment appelés « modem 3G/4G » (selon la technologie du réseau de communication mobile auquel ils se connectent) et se présentent sous la forme d'un boitier de petite taille équipé d'une antenne interne, d'une carte SIM d'un opérateur du réseau de communication mobile, et disposant d'une interface de connexion avec un équipement (auquel le dispositif fournit un accès à Internet), typiquement un ordinateur portable.

Cette interface est le plus souvent une connectique filaire de type USB (« Universal Serial Bus »), d'où la dénomination « clé » 3G/4G souvent donnée à ces dispositifs, mais elle peut également être une liaison sans fil WiFi et/ou Bluetooth. Le modem cumule généralement plusieurs connectivités.

La connexion sans fil offre de nombreux avantages. En particulier, d'une part l'accès à Internet peut être fourni à une pluralité d'équipements, et d'autre part la portée moyenne du WiFi ou du Bluetooth fait qu'il possible d'éloigner le dispositif de sorte à le placer en un endroit ou la réception du réseau de communication sans fil est la meilleure (par exemple en hauteur, loin de tout objet métallique, etc.).

La connectivité USB impose quant à elle la présence d'un court câble terminé par un port mâle USB. Lorsque le modem est coupé ou utilisé sans fil, ce câble s'avère peu esthétique, voire gênant pour le rangement.

On connait des modems pour lesquels le câble est amovible, ce qui résout les inconvénients précités, mais rajoute le risque de perdre le câble, dans la mesure où il ne faut pas l'oublier lorsque l'on transporte le modem.

L'invention vient améliorer la situation.

### PRESENTATION DE L'INVENTION

La présente invention se rapporte ainsi à un dispositif pour l'accès à Internet via un réseau de communication mobile, comprenant un module de traitement de données disposé dans un boitier, un câble souple s'étendant à l'extérieur du boitier et étant relié au module de traitement de données, le câble étant terminé par un connecteur pour la connexion du dispositif à un équipement, le dispositif étant caractérisé en ce que le boitier comprend au moins un élément d'engagement principal du connecteur, le boitier et le câble étant configurés de telle sorte que lorsque le connecteur est engagé dans l'élément d'engagement principal, le câble forme une boucle définissant un espace entre le boitier et le câble pour la suspension du dispositif.

Le présent dispositif permet ainsi d'utiliser le câble USB comme moyen de suspension du dispositif lorsqu'aucune connexion filaire n'est mise en oeuvre. Cela permet à la fois d'améliorer la qualité de réception du réseau (puisqu'il devient possible de suspendre le dispositif là où le réseau est le meilleur) et de régler le problème d'inesthéticité du câble lorsqu'il n'est pas utilisé.

Selon d'autres caractéristiques avantageuses et non limitatives :
- le boitier comprend en outre un élément d'engagement auxiliaire du connecteur, le boitier étant configuré de telle sorte que lorsque le connecteur est engagé dans l'élément d'engagement auxiliaire le câble suit le contour du dispositif.
   Les éléments d'engagement principal et auxiliaire permettent deux positions alternatives du câble, dont une dans laquelle il n'y a plus de boucle, pour un rangement et un transport aisés ;
- le boitier comprend au niveau de son contour une rainure configurée pour recevoir le câble lorsque le connecteur est engagé dans l'élément d'engagement auxiliaire.
   La rainure permet de faire disparaître complètement le câble dans la position rangement, pour une esthétiques encore améliorée ;
- le boitier comprend une première face et une deuxième face opposées, le câble s'étendant hors du boitier depuis la première face, et chaque élément d'engagement étant disposé sur la deuxième face.
   Cette disposition correspond à une structure parallélépipédique du boitier, la structure la plus naturelle et la plus adaptée pour recevoir de façon compacte les composants ;
- le câble s'étend tangentiellement de la première face.
   Ainsi, la boucle prend une forme de demi-ellipse avant pour axe la face supérieure du boitier, pour une suspension aisée ;
- chaque élément d'engagement consiste en une cavité complémentaire de la forme du connecteur dans laquelle le connecteur s'engage par translation.
   Une telle cavité permet de faire disparaitre complètement le connecteur à l'intérieur du boitier lorsqu'il est engagé, de sorte à le protéger ;
- la direction selon laquelle le connecteur s'engage dans chaque élément d'engagement est sensiblement orthogonale à une direction selon laquelle le connecteur peut s'engager dans un port de l'équipement pour connexion.
   Cette direction permet d'une part que le câble s'étende tangentiellement à la deuxième face, et d'autre part qu'il soit impossible d'endommager le connecteur quand bien même on porterait un choc au niveau de l'élément d'engagement ;
- le câble comprend une languette de préhension ;
   Ainsi, le connecteur peut être extrait de l'élément d'engagement même lorsqu'il est complétement enfoncé et inaccessible ;
- la languette est un élément souple libre en translation le long du câble.
   Cela permet d'éviter que la languette elle-même puisse être endommagée bien qu'elle dépasse ;
- le dispositif comprend en outre un affichage sur le boitier, affichant dynamiquement un indicateur de qualité de réception du réseau de communication mobile.
   Cet indicateur permet de facilement trouver le meilleur point de suspension du dispositif 1 en se déplaçant dans l'espace ;
- le dispositif comprend en outre des moyens de connexion sans fil reliés au module de traitement de données pour la connexion sans fil du dispositif à un équipement ;
   Les moyens sans fil (typiquement Wi-Fi) permettent de fournir une connexion à distance à un voire plusieurs équipements.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un mode de réalisation avantageux d'un dispositif selon l'invention ;
- les figures 2a-2b sont deux vues d'un mode de réalisation avantageux du dispositif selon l'invention respectivement dans les deux positions ;
- les figures 3a-3b représentent la mise en place du dispositif selon l'invention en position Wi-Fi.

### DESCRIPTION DETAILLEE

### Architecture interne

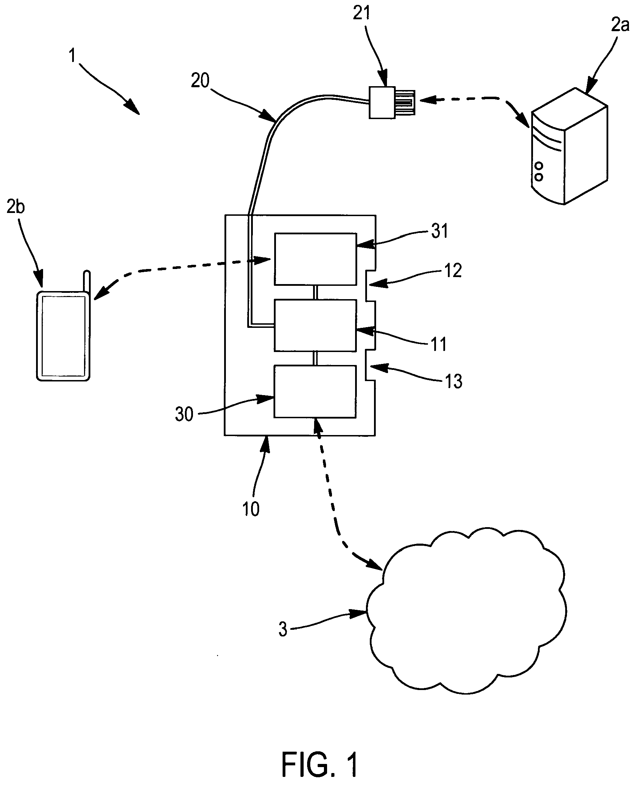

L'architecture du présent dispositif 1 pour l'accès à Internet via un réseau de communication mobile 3 est illustrée par la figure 1.

Comme expliqué précédemment, ce dispositif 1 se connecte d'une part à un réseau 3 de communication mobile, typiquement un réseau de téléphonie mobile de type 3G ou 4G relié au réseau Internet (on comprendra toutefois que l'invention n'est limitée à aucun type de réseau de communication mobile), et d'autre part à un ou plusieurs équipements 2a, 2b, auxquels il va apporter l'accès à Internet.

Le dispositif 1 comprend un boitier 10, qui peut être de nombreuses formes, mais qui est avantageusement de forme sensiblement parallélépipédique, l'on verra pourquoi plus tard. Ce boitier 10, qui est par exemple en plastique, héberge les composants électroniques du dispositif 1.

Parmi ceux-ci on trouve un module de traitement de données 11, un premier module de connexion sans fil 30, et avantageusement un deuxième module de connexion sans fil 31. Une batterie peut être également présente (le câble 20 qui va être décrit permet une alimentation électrique, mais une source interne d'énergie est nécessaire lors d'un fonctionnement sans fil).

Le module de traitement de données 11, qui prend par exemple la forme d'un processeur, assure les fonctions de modem du dispositif 1.

Le premier module de connexion sans fil 30 permet la connexion au réseau de communication mobile 3, et reçoit en particulier une carte SIM (« Subscriber Identity Module ») d'un opérateur du réseau de communication mobile 3.

Ce module de connexion sans fil 30 est connecté au module de traitement de données 11, lui-même relié à un câble 20 qui s'étend à l'extérieur du boitier 10, et qui se termine par un connecteur 21, pour la connexion du dispositif 1 à un équipement 2a. Comme l'on verra plus loin, ce câble 20 est souple.

Par connecteur 21 on entend une prise male standardisée (en particulier suivant la norme USB mentionnée précédemment, mais d'autres normes comme RJ45 ou IEEE1394 sont envisageables) adaptée pour s'engager dans un port femelle compatible de l'équipement 2a, 2b. Lorsque le connecteur 21 est branché (engagé dans le port de l'équipement 2a, 2b), le module de traitement de données 11 route les paquets échangés entre le réseau de communication mobile 3 et l'équipement 2a, 2b.

Le deuxième module de connexion sans fil 31 (qui peut être éventuellement partiellement confondu avec le premier module de connexion sans fil 30, par exemple en partageant son antenne) offre une alternative à la connexion filaire via le câble 30. Dans la suite de la présente description, on prendra l'exemple d'un module de connexion Wi-Fi, mais on comprendra que l'invention n'est pas limitée à cette technologie (on pense par exemple au Bluetooth).

Sur la figure 1, l'équipement 2a est un poste de travail de type PC connecté au dispositif 1 via le câble 20, et l'équipement 2b est un terminal de type smartphone connecté au dispositif 1 via le Wi-Fi. Les deux connexions peuvent être alternatives ou simultanées.

De façon générale, on comprendra que l'homme du métier saura adapter les composants internes du boitier 10 selon l'utilisation prévue du dispositif 1.

### Architecture externe - Position Wi-Fi

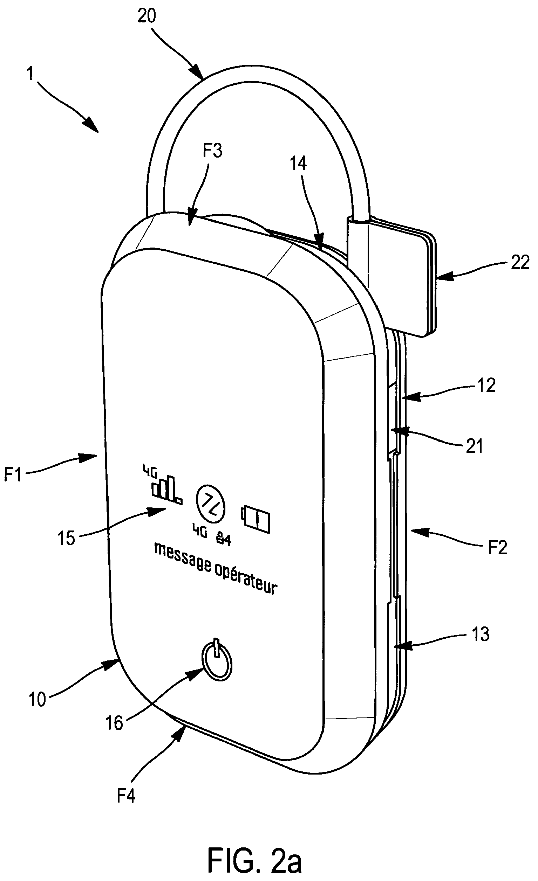

Le dispositif 1 se distingue en ce qu'il comprend un élément d'engagement principal 12 du connecteur 21, représenté sur la figure 1 mais dont la spécificité est visible plus particulièrement sur la **figure 2a****.**

Le boitier 10 et le câble 20 sont en effet configurés de telle sorte que lorsque le connecteur 21 est engagé dans l'élément d'engagement principal 12, le câble 20 forme une boucle définissant un espace entre le boitier 10 et le câble 20 pour la suspension du dispositif 1.

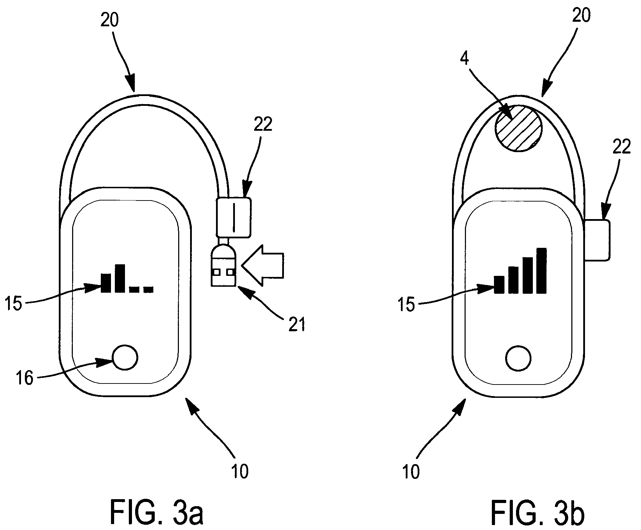

L'utilité de la boucle apparait particulièrement aux **figures 3a et 3b****,** sur lesquelles on remarque l'élément 4, qui peut être toute protubérance sur laquelle le haut de la boucle peut reposer. Ce peut être un clou à un mur, un barreau d'un meuble, une poignée de fenêtre, etc. Cette suspension permet de ranger le dispositif 1 en position verticale, mais surtout d'améliorer la Qualité de Service (QoS), en permettant de placer le dispositif 1 facilement là où la réception du réseau de communication mobile 3 est la meilleure (en hauteur, près des ouvertures, etc.).

Cette position du câble 20 correspond à une « position Wi-Fi », car elle est adaptée à un fonctionnement du dispositif en connexion sans fil (typiquement Wi-Fi) avec le ou les équipements 2a, 2b via le deuxième module 31. Dans ce mode de fonctionnement, le dispositif n'a pas besoin d'être à proximité immédiate de l'équipement 2a, 2b, et il devient intéressant de placer astucieusement le dispositif 1 pour optimiser la qualité de réception du réseau 3.

Comme l'on voit sur la figure 2a, une surface du boitier 10 peut comprendre un affichage 15 représentant dynamiquement la qualité de réception du réseau 3 via l'affichage d'un indicateur.

Ici, l'indicateur de qualité prend la forme de barres : plus celles-ci sont nombreuses, meilleur est le signal reçu. Cela permet de faciliter la recherche de la position optimale du dispositif 1. L'affichage 15 peut également représenter le niveau de batterie du dispositif 1, et si le module de connexion Wi-Fi 31 est activé. Un bouton 16 permet l'allumage/extinction du dispositif 1, et éventuellement l'activation/désactivation du module Wi-Fi 31 (par exemple en appuyant deux fois rapidement sur ce bouton 16).

La forme de boucle est définie par trois paramètres : la position du point du boitier 10 à partir duquel le câble 20 s'étend, la position de l'élément d'engagement principal 12, et la longueur du câble 20.

Lorsqu'il est parallélépipédique, le boitier 10 comprend une première face F1 et une deuxième face F2 opposées (qui correspondent sur la figure 2a aux faces gauche et droite). Le câble 20 s'étend hors du boitier 10 depuis la première face F1, et l'élément d'engagement 12 est disposé sur la deuxième face F2.

Dans ce cas de figure, la condition pour que le boitier 10 soit configuré de telle sorte que le câble forme une boucle définissant un espace entre le boitier et le câble pour la suspension du dispositif est alors que la longueur du câble 20 soit sensiblement supérieure à la distance entre les deux faces. Plus particulièrement, en définissant F3 la face supérieure du boitier F3, doit être vérifiée l'équation (distance F3/point de fixation du câble) + (distance F3/élément d'engagement principal) + (distance F1/F2) > longueur du câble.

On comprendra que l'homme du métier saura adapter selon la forme du boitier 10, la position du point du boitier 10 à partir duquel le câble 20 s'étend, la position de l'élément d'engagement principal 12, et la longueur du câble 20, pour obtenir la boucle.

### Architecture externe - Position rangement

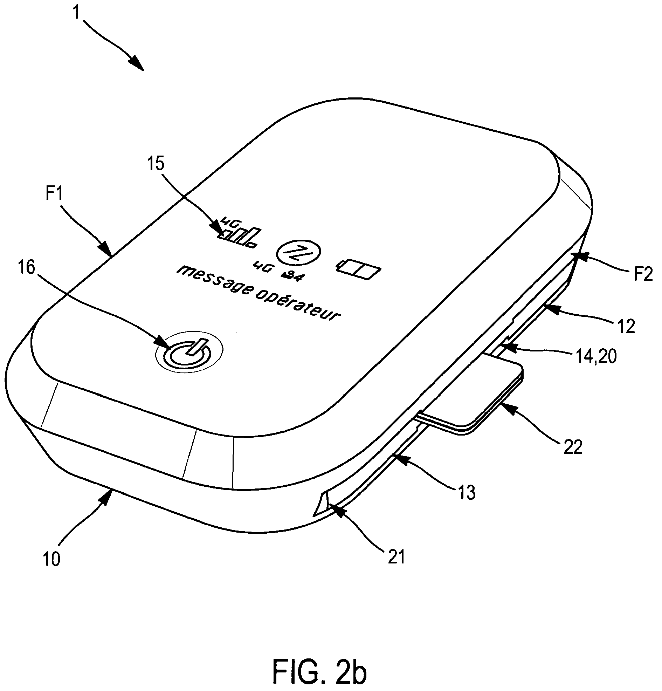

De façon particulièrement préférée, la position Wi-Fi est une première position du câble 20, le boitier 10 étant configuré pour permettre en outre une deuxième position du câble 20, la « position rangement », représenté sur la **figure 2b****.**

Pour cela, le boitier 10 comprend en outre un élément d'engagement auxiliaire 13 du connecteur 21. Le boitier 10 et le câble 20 sont cette fois-ci configuré de telle sorte que lorsque le connecteur 21 est engagé dans l'élément d'engagement auxiliaire 13 le câble 20 suit le contour du dispositif 1. En d'autres termes, le câble ne forme plus une boucle (il n'y a pas d'espace entre le boitier 10 et le câble 20, ou du moins pas assez pour insérer un élément de suspension), d'où un format plus compact, idéal pour le rangement et le transport.

Plus particulièrement, si le boitier 10 comprend au niveau de son contour une rainure 14, celle-ci reçoit le câble 20 lorsque le connecteur 21 est engagé dans l'élément d'engagement auxiliaire 13, de sorte à ce que le câble 20 devienne invisible.

Le câble 20 étant souple, il est possible de passer aisément de l'une à l'autre des positions Wi-Fi et rangement en déformant le câble 20.

Dans le mode de réalisation préféré illustré par les figures, l'élément d'engagement auxiliaire 13 est également disposé sur la face F2, avec un passage sur le sommet du boitier 10. Cette fois-ci, on a environ (distance F3/point de fixation du câble) + (distance F3/élément d'engagement auxiliaire) + (distance F1/F2) = longueur du câble.

Dans la plupart des cas, les éléments d'engagement principal et auxiliaire 12, 13 sont alignés mais séparés d'une distance équivalente à la longueur de « mou » dans la boucle, mais il est à noter que de nombreuses autres configurations sont possibles.

En particulier, il n'est pas exclu que les éléments d'engagement principal et auxiliaire 12, 13 soient confondus si le boitier 10 est configuré de sorte qu'il existe deux dispositions du câble 20 différentes le long des parois du boitier (par exemple une le long de la face supérieure F3 et une le long de la face inférieure F4 telles qu'elles apparaissent sur la figure 2a) telles que le câble 20 présente dans l'une la boucle de suspension, et dans l'autre suive la paroi.

Il est à noter que cette position rangement n'exclut en rien un fonctionnement en mode Wi-Fi (la figure 2b représente justement le dispositif 1 allumé), bien qu'il ne soit pas possible dans cette position de le suspendre.

### Eléments d'engagement

Les éléments d'engagement 12, 13 peuvent être n'importe quelle pièce pouvant recevoir de façon amovible le connecteur 21, l'engagement étant suffisamment fort pour pouvoir suspendre le dispositif 1 par le câble 20 sans risque de chute.

Le maintien de l'engagement est assuré par les forces de frottement entre l'élément d'engagement et le connecteur 21, mais alternativement on peut par exemple utiliser un connecteur clipsable.

Comme l'on voit sur les figures, le ou les éléments d'engagement 12, 13 consistent en une cavité complémentaire de la forme du connecteur 21 dans laquelle le connecteur 21 s'engage par translation. Cela est le moyen le plus simple, le plus efficace et le plus esthétique pour obtenir l'engagement.

Toutefois, contrairement à ce que l'on a pu voir par exemple sur certains disques durs, la translation qui permet l'engagement ne se fait pas selon la direction dans laquelle le connecteur 21 peut s'engager dans un port de l'équipement 2a, 2b pour connexion (en d'autres termes l'axe du connecteur 21).

Au contraire, la direction selon laquelle le connecteur 21 s'engage dans le ou les éléments d'engagement 12, 13 est choisie différente de cette direction selon laquelle le connecteur 21 peut s'engager dans un port de l'équipement 2a, 2b pour connexion, voire sensiblement orthogonale. Cela est visible par exemple sur la figure 3a, qui représente la direction d'engagement.

Cette direction d'engagement au moins partiellement « latérale » et non « longitudinale » a de nombreux avantages :
- le connecteur 21 ne risque pas de se détacher en cas de traction sur le câble 20 (puisque qu'une telle traction est selon l'axe du connecteur 21, en d'autres termes dans la direction selon laquelle le connecteur 21 peut s'engager dans un port). Cela est important lorsque le dispositif 1 est en position suspendue et pend : une force de traction égale à son poids vient s'appliquer sur le câble 20, et le dispositif viendrait chuter (et serait probablement endommagé) si cette traction entraînait le détachement du connecteur 21 ;
- le câble 20 est tangent à la paroi du boitier 10, facilitant la forme de boucle et améliorant l'esthétisme ;
- il n'y a pas de risque de tordre le connecteur 21 en cas d'impact sur le côté du boitier 10 ou de tension un peu forte sur la boucle du câble 20 ;
- la faible profondeur de la cavité requise facilite l'organisation interne des composants ;
- l'utilisation d'une languette 22 est rendue possible.

Lorsque la direction d'engagement est orthogonale à l'axe du connecteur 21 (la direction selon laquelle le connecteur 21 peut s'engager dans un port), les effets ci-dessus sont maximaux.

Comme l'on voit sur les figures, le câble 20 comprend une languette 22 de préhension, disposée au voisinage du connecteur 21. Cette languette 22 offre une surface de préhension s'étendant orthogonalement à la direction du câble 20, en d'autre termes selon la direction d'engagement (et donc de dégagement) du câble 20. Une traction sur la languette permet ainsi très facilement de sortir le connecteur 21 de l'un des éléments d'engagement 12, 13.

Cela est très utile en complément avec une rainure 14 : le câble 20 et le connecteur 21 disparaissent complètement dans la face F2 du boitier 10, et il est difficile de les sortir à la main. La languette 22 dépasse et offre une prise.

Cette dernière consiste par exemple en une feuille en un matériau souple (typiquement du caoutchouc) entourant le câble 20, éventuellement libre en translation le long du câble 20. La souplesse de la languette 22 permet d'éviter tout risque de casse.

## Revendications

1. Dispositif (1) pour l'accès à Internet via un réseau de communication mobile (3), comprenant un module de traitement de données (11) disposé dans un boitier (10), un câble (20) souple s'étendant à l'extérieur du boitier (10) et étant relié au module de traitement de données (11), ledit câble (20) étant terminé par un connecteur (21) pour la connexion du dispositif (1) à un équipement (2a, 2b),
le dispositif étant **caractérisé en ce que** le boitier (10) comprend au moins un élément d'engagement principal (12) du connecteur (21), chaque élément d'engagement (12, 13) consistant en une cavité complémentaire de la forme du connecteur (21) dans laquelle le connecteur (21) s'engage par translation différente d'une direction selon laquelle le connecteur (21) peut s'engager dans un port de l'équipement (2a, 2b) pour connexion, le boitier (10) et le câble (20) étant configurés de telle sorte que lorsque le connecteur (21) est engagé dans l'élément d'engagement principal (12), le câble (20) forme une boucle définissant un espace entre le boitier (10) et le câble (20) pour la suspension du dispositif (1).

2. Dispositif selon la revendication 1, dans lequel le boitier (10) comprend en outre un élément d'engagement auxiliaire (13) du connecteur (21), le boitier (10) et le câble étant configurés de telle sorte que lorsque le connecteur (21) est engagé dans l'élément d'engagement auxiliaire (13), le câble (20) suit le contour du dispositif (1).

3. Dispositif selon la revendication 2, dans lequel le boitier (10) comprend au niveau de son contour une rainure (14) configurée pour recevoir le câble (20) lorsque le connecteur (21) est engagé dans l'élément d'engagement auxiliaire (13).

4. Dispositif selon l'une des revendications 1 à 3, dans lequel le boitier (10) comprend une première face (F1) et une deuxième face (F2) opposées, le câble (20) s'étendant hors du boitier (10) depuis la première face (F1), et chaque élément d'engagement (12, 13) étant disposé sur la deuxième face (F2).

5. Dispositif selon la revendication 4, dans lequel le câble (20) s'étend tangentiellement de la première face (F1).

6. Dispositif selon l'une des revendications 1 à 5, dans lequel la direction selon laquelle le connecteur (21) s'engage dans chaque élément d'engagement (12, 13) est sensiblement orthogonale à la direction selon laquelle le connecteur (21) peut s'engager dans un port de l'équipement (2a, 2b) pour connexion.

7. Dispositif selon l'une des revendications 1 à 6, dans lequel le câble (20) comprend une languette (22) de préhension.

8. Dispositif selon la revendication 7, dans lequel la languette (22) est un élément souple libre en translation le long du câble (20).

9. Dispositif selon l'une des revendications 1 à 8, comprenant en outre un affichage (15) sur le boitier (10), affichant dynamiquement un indicateur de qualité de réception du réseau de communication mobile (3).

10. Dispositif selon l'une des revendications 1 à 9, comprenant en outre des moyens de connexion sans fil (31) reliés au module de traitement de données (11) pour la connexion sans fil du dispositif (1) à un équipement (2a, 2b).

## Patentansprüche

1. Vorrichtung (1) für den Internetzugang über ein mobiles Kommunikationsnetz (3), umfassend ein Datenverarbeitungsmodul (11), das in einem Gehäuse (10) angeordnet ist, ein flexibles Kabel (20), das sich außerhalb des Gehäuses (10) erstreckt und mit dem Datenverarbeitungsmodul (11) verbunden ist, wobei das Kabel (20) mit einem Steckverbinder (21) für den Anschluss der Vorrichtung (1) an ein Gerät (2a, 2b) abgeschlossen ist,
wobei die Vorrichtung **dadurch gekennzeichnet ist, dass** das Gehäuse (10) mindestens ein Haupteingriffselement (12) des Steckverbinders (21) aufweist, wobei jedes Eingriffselement (12, 13) aus einem komplementären Hohlraum der Form des Steckverbinders (21) besteht, in den der Steckverbinder (21) durch Translation eingreift, die verschieden ist von einer Richtung, in der der Steckverbinder (21) in einen Port des Geräts (2a, 2b) für den Anschluss eingreifen kann, wobei das Gehäuse (10) und das Kabel (20) derart konfiguriert sind, dass, wenn der Steckverbinder (21) in das Haupteingriffselement (12) eingreift, das Kabel (20) eine Schleife bildet, die einen Raum zwischen dem Gehäuse (10) und dem Kabel (20) zum Aufhängen der Vorrichtung (1) bildet.

2. Vorrichtung nach Anspruch 1, wobei das Gehäuse (10) ferner ein Hilfseingriffselement (13) des Steckverbinders (21) aufweist, wobei das Gehäuse (10) und das Kabel derart konfiguriert sind, dass, wenn der Steckverbinder (21) in das Hilfseingriffselement (13) eingreift, das Kabel (20) der Kontur der Vorrichtung (1) folgt.

3. Vorrichtung nach Anspruch 2, wobei das Gehäuse (10) an seiner Kontur eine Nut (14) aufweist, die konfiguriert ist, um das Kabel (20) aufzunehmen, wenn der Steckverbinder (21) in das Hilfseingriffselement (13) eingreift.

4. Vorrichtung nach einem der Ansprüche 1 bis 3, wobei das Gehäuse (10) eine erste Seite (F1) und eine zweite Seite (F2) aufweist, die gegenüberliegend sind, wobei sich das Kabel (20) außerhalb des Gehäuses (10) von der ersten Seite (F1) erstreckt, und wobei jedes Eingriffselement (12, 13) auf der zweiten Seite (F2) angeordnet ist.

5. Vorrichtung nach Anspruch 4, wobei sich das Kabel (20) tangential von der ersten Seite (F1) erstreckt.

6. Vorrichtung nach einem der Ansprüche 1 bis 5, wobei die Richtung, in der der Steckverbinder (21) in jedes Eingriffselement (12, 13) eingreift, im Wesentlichen orthogonal zu der Richtung ist, in der der Steckverbinder (21) in einen Port des Geräts (2a, 2b) für den Anschluss eingreifen kann.

7. Vorrichtung nach einem der Ansprüche 1 bis 6, wobei das Kabel (20) eine Grifflasche (22) aufweist.

8. Vorrichtung nach Anspruch 7, wobei die Lasche (22) ein flexibles Element ist, das frei beweglich entlang des Kabels (20) ist.

9. Vorrichtung nach einem der Ansprüche 1 bis 8, ferner umfassend eine Anzeige (15) auf dem Gehäuse (10), die einen Indikator der Empfangsqualität des mobilen Kommunikationsnetzes (3) dynamisch anzeigt.

10. Vorrichtung nach einem der Ansprüche 1 bis 9, ferner umfassend Mittel zum drahtlosen Anschluss (31), die mit dem Datenverarbeitungsmodul (11) für den drahtlosen Anschluss der Vorrichtung (1) an ein Gerät (2a, 2b) verbunden sind.

## Claims

1. Device (1) for accessing the internet via a mobile communication network (3), comprising a data processing module (11) arranged in a housing (10), a flexible cable (20) extending outside the housing (10) and being linked to the data processing module (11), said cable (20) being terminated by a connector (21) for the connection of the device (1) to an equipment item (2a, 2b),
the device being **characterized in that** the housing (10) comprises at least one main engagement element (12) for the connector (21), each engagement element (12, 13) consisting of a cavity complementing the form of the connector (21) in which the connector (21) is engaged by different translation to a direction in which the connector (21) can be engaged in a port of the equipment item (2a, 2b) for connection, the housing (10) and the cable (20) being configured in such a way that, when the connector (21) is engaged in the main engagement element (12), the cable (20) forms a loop defining a space between the housing (10) and the cable (20) for the suspension of the device (1).

2. Device according to Claim 1, in which the housing (10) further comprises an auxiliary engagement element (13) for the connector (21), the housing (10) and the cable being configured in such a way that, when the connector (21) is engaged in the auxiliary engagement element (13), the cable (20) follows the outline of the device (1).

3. Device according to Claim 2, in which the housing (10) comprises, on its outline, a groove (14) configured to receive the cable (20) when the connector (21) is engaged in the auxiliary engagement element (13).

4. Device according to one of Claims 1 to 3, in which the housing (10) comprises a first face (F1) and a second face (F2) opposite one another, the cable (20) extending out of the housing (10) from the first face (F1), and each engagement element (12, 13) being arranged on the second face (F2).

5. Device according to Claim 4, in which the cable (20) extends tangentially from the first face (F1).

6. Device according to one of Claims 1 to 5, in which the direction in which the connector (21) is engaged in each engagement element (12, 13) is substantially orthogonal to the direction in which the connector (21) can be engaged in a port of the equipment item (2a, 2b) for connection.

7. Device according to one of Claims 1 to 6, in which the cable (20) comprises a gripping tab (22).

8. Device according to Claim 7, in which the tab (22) is a flexible element free to move translationally along the cable (20).

9. Device according to one of Claims 1 to 8, further comprising a display (15) on the housing (10), dynamically displaying an indicator of reception quality of the mobile communication network (3).

10. Device according to one of Claims 1 to 9, further comprising wireless connection means (31) linked to the data processing module (11) for the wireless connection of the device (1) to an equipment item (2a, 2b).
